# FASCICULE DE BREVET EUROPEEN

(11) **EP 3 353 123 B1**
(45) Date de publication et mention de la délivrance du brevet: **05.02.2020**
(21) Numéro de dépôt: 16756729.6
(22) Date de dépôt: 28.07.2016
(51) Int. Cl.: C03B 37/04, C03B 37/06, C03B 5/235, C03B 5/237, D06B 3/00, D01D 10/02, D02J 13/00

(54) **PROCÉDÉ DE FABRICATION DE PRODUITS DE FIBRE DE VERRE COMPORTANT DES ÉTAPES D'ENSIMAGE ET DE DÉSENSIMAGE ET INSTALLATION ADAPTÉE POUR SA MISE EN OEUVRE**
VERFAHREN ZUR HERSTELLUNGS EINES FASERMATERIALS MIT SCHRITTEN ZUM SCHLICHTEN UND ZUM ENTSCHLICHTEN SOWIE ZUR DURCHFÜHRUNG DES VERFAHRENS GEEIGNETE ANLAGE
FIBERGLASS MATERIAL MANUFACTURE METHOD COMPRISING STEPS OF SIZING AND DESIZING, AND FACILITY SUITABLE FOR IMPLEMENTING SAID METHOD

(30) Priorité: 31.07.2015 FR 1557422
(43) Date de publication de la demande: 01.08.2018
(73) Titulaire: L'Air Liquide Société Anonyme pour l'Etude et l'Exploitation des Procédés Georges Claude, 75007 Paris (FR)
(72) Inventeur: JARRY, Luc, 61270 Beaufai (FR); JOUMANI, Youssef, 78121 Crespieres (FR); BEASSE, Grégoire, 75014 Paris (FR)
(74) Mandataire: De Vleeschauwer, Natalie Y.L.D.
(86) Numéro de dépôt international: PCT/FR2016/051962
(87) Numéro de publication internationale: WO 2017/021624

(56) Documents cités:
- EP-A1- 2 551 243
- EP-A2- 1 338 848
- WO-A1-2013/010722
- FR-A1- 3 000 174
- FR-A1- 3 015 636
- US-A- 2 845 364
- US-A1- 2010 162 772

## Description

La présente invention concerne la fabrication de produits de fibre de verre.

Par « produit de fibre de verre » on comprend des fibres de verre en tant que tels ainsi que des produits les contenant.

Il est connu de fabriquer des fibres de verre par un procédé comprenant la production de verre fondu dans un four de fusion, le filage au moyen d'une filière de filets à partir de verre fondu issu du four de fusion, l'étirage des filets en filaments, l'ensimage des filaments, la collection des filaments ensimés et la transformation des filaments collectés en produit de fibre de verre.

Il est également connu, par exemple de FR-A-3015636 ainsi que FR-A-3000174 de chauffer de l'air par échange thermique avec des fumées évacuées d'un four de fusion de verre dans un échangeur primaire d'un ensemble d'échange de chaleur et de préchauffer un réactif choisi parmi un oxydant riche en oxygène et un combustible par échange thermique avec de l'air chaud ainsi obtenu dans un échangeur secondaire de l'ensemble d'échange de chaleur avant d'utiliser le réactif préchauffé ainsi obtenu comme réactif de combustion dans le four de fusion.

L'ensimage de filaments est une pratique courante et souvent indispensable dans la fabrication de produits de fibre de verre comme notamment les fils de verre, les tissus de verre et les fibres de renforcement. En effet, l'ensimage lubrifie les filaments et les protège (notamment contre l'abrasion) pendant la filature (fabrication de fils à partir de fibres), pendant le moulinage ou retordage, pendant la texturation, pendant le tricotage ou le tissage, etc.

Toutefois, la présence d'un agent d'ensimage sur le produit de fibre de verre pose souvent des problèmes techniques pour le traitement/l'utilisation aval(e) du produit de fibre de verre. Ainsi, l'agent d'ensimage peut, par exemple, empêcher une teinture efficace du produit de verre en bloquant la fixation du colorant sur les fibres de verre. Dans le cas d'un produit de renforcement destiné à être incorporé dans une matière matrice, l'agent d'ensimage peut empêcher l'ancrage du produit de fibre de verre dans la matière matrice, voire d'empêcher la fixation d'un agent d'ancrage sur le produit de fibre de verre. L'ensimage peut, de manière analogue poser problème pour l'encollage et la réticulation ultérieur des filaments.

Il est donc souvent nécessaire de désensimer le produit de fibre de verre avant son finissage (apprêtage) ou son utilisation finale.

Il est ainsi connu de désensimer des produits de fibre de verre par désensimage thermique. Lors du désensimage thermique, le produit de fibre de verre est soumis à des températures provoquant la volatilisation et/ou la combustion de l'ensimage présent sur le produit de verre.

Des exemples de procédés connus de désensimage thermique sont décrits dans US2633428, US2665125, US2845364, US2970934, et US3012845.

La présente invention a pour but de fournir un procédé de fabrication de produits de fibre de verre optimisé car moins énergivore.

La présente invention a plus particulièrement pour but de fournir un tel procédé optimisé de fabrication sans effet négatif sur la qualité des produits de fibres de verre.

Suivant la présente invention, ceci est notamment réalisé par une meilleure intégration énergétique de la phase de production de verre fondu et la phase de transformation du verre fondu en produit de fibre de verre.

La présente invention a également pour but de fournir une installation adaptée pour la mise en œuvre d'un tel procédé optimisé.

Dans le procédé de fabrication suivant l'invention, du verre fondu est transformé en produit de fibre de verre. Cette transformation comporte les étapes suivantes :
∘ filage du verre fondu en au moins un filet,
∘ étirage du au moins un filet en un ou plusieurs filaments,
∘ ensimage du ou des filaments,
∘ collection du ou des filaments ensimés,
∘ production du produit de fibre de verre au moyen du ou des filaments ensimés collectés, et
∘ désensimage thermique du produit de fibre de verre, c'est-à-dire une étape de désensimage par volatilisation et/ou combustion d'un agent d'ensimage appliqué sur le ou les filaments pendant l'ensimage.

Le verre fondu à être transformé en produit de fibre de verre est produit dans un four de fusion chauffé par combustion d'un combustible avec un oxydant riche. Dans le présent contexte on comprend par « oxydant riche » un gaz ayant une teneur en oxygène de 80%vol à 100%vol. La combustion génère de la chaleur pour la fusion et des fumées. Les fumées générées sont évacuées du four de fusion à une température entre 1000°C et 1600°C.

La combustion avec un oxydant riche chauffe le four de fusion avec un rendement élevé.

Il est à noter que le chauffage du four de fusion par combustion d'un combustible avec un oxydant riche n'exclut pas que le four soit également chauffé par des moyens supplémentaires, tels que, par exemple, des électrodes.

Suivant l'invention, une première optimisation énergétique du procédé de fabrication est réalisée :
∘ en ce qu'on chauffe de l'air par échange thermique avec des fumées évacuées dans un ensemble d'échange de chaleur avec obtention d'air chaud,
∘ en ce qu'on préchauffe un réactif par échange thermique avec l'air chaud dans l'ensemble d'échange de chaleur avec obtention de réactif préchauffé et d'air tempéré à une température entre 200°C et 500°C, et
∘ en ce qu'on utilise le réactif préchauffé comme réactif de combustion dans le four.

Le réactif est choisi parmi les oxydants riches et les combustibles gazeux. Suivant une forme de réalisation préférée, on préchauffe un oxydant riche avant son utilisation dans le four. Il est également possible de préchauffer à la fois un oxydant riche et un combustible gazeux avant leur utilisation dans le four. Dans ce cas, le préchauffage des deux réactifs peut être réalisé en série ou en parallèle.

Une seconde optimisation énergétique du procédé de fabrication est réalisée en ce que de l'air tempéré issu de l'ensemble d'échange de chaleur est mis en œuvre lors de la transformation du verre fondu en produit de fibre de verre, de manière à exploiter la chaleur résiduelle encore présente dans cet air tempéré.

De l'air tempéré issu de l'ensemble d'échange de chaleur est plus particulièrement mis en œuvre lors du désensimage du produit de fibre de verre, de préférence en mettant de l'air tempéré en contact avec le produit de fibre de verre afin de promouvoir la volatilisation et/ou la combustion de l'ensimage présent sur le produit de fibre de verre.

Il est également possible d'utiliser de l'air tempéré lors du désensimage en tant que comburant pour le chauffage par combustion d'un four de désensimage dans lequel le produit de verre est amené à sa température de désensimage.

Suivant la présente invention, on réalise ainsi une synergie énergétique entre la fusion et la transformation du verre fondu en aval de la fusion en ce que de l'air tempéré issu de l'ensemble d'échange de chaleur est mis en œuvre lors du désensimage du produit de fibre de verre.

De l'air tempéré peut également être mis en œuvre dans une ou plusieurs autres étapes de la transformation du verre fondu.

La présente invention couvre donc également des procédés combinant l'utilisation d'air tempéré issu de l'ensemble d'échange de chaleur lors de l'étape de désensimage, telle que décrite ci-dessus, avec une ou plusieurs autres utilisations d'air tempéré issu de l'ensemble d'échange de chaleur.

Ainsi, de l'air tempéré peut avantageusement aussi être mis en œuvre lors de l'étape de l'ensimage, par exemple en utilisant de l'air tempéré comme agent de pulvérisation pour l'agent d'ensimage.

Quand la transformation comporte une étape de séchage du ou des filaments ou de fils les contenant, de l'air tempéré peut être mis en œuvre comme agent de séchage en contact avec le ou les filaments ou fils. Le séchage des filaments peut notamment être utile afin de fixer l'agent d'ensimage sur les filaments ensimés par évaporation ou volatilisation d'eau ou d'un autre solvant présent dans l'agent d'ensimage.

De l'air tempéré peut également être mis en œuvre lors de l'étirage du filet.

Distinction est faite entre :
a) l'étirage mécanique au moyen d'un bobinoir ou organe d'enroulement analogue,
b) l'étirage par frottement gazeux au moyen d'un ou plusieurs courants gazeux d'étirage, et
c) l'étirage centrifuge au moyen d'une centrifugeuse.

L'étirage centrifuge est en pratique industrielle généralement combiné avec un étirage par frottement gazeux.

Selon un premier mode de réalisation de l'étirage par frottement gazeux, également appelé étirage à flamme, le filet de verre est refroidi et se solidifie, avec obtention d'une baguette de verre. La baguette de verre est introduite dans une flamme. L'extrémité de la baguette est ainsi fondue et ensuite étirée par les gaz de combustion de la flamme, de manière à former un ou des filaments de laine de verre. L'étirage à flamme permet de produire des fibres de verre de grande finesse mais présente l'inconvénient de consommer beaucoup d'énergie notamment à cause de la double fusion du verre. L'étirage à flamme est le plus souvent utilisé pour des produits à haute valeur ajoutée.

Selon un deuxième procédé d'étirage par frottement gazeux, légèrement moins énergivore, également appelé étirage à gaz, le filet de verre fondu est directement, c'est-à-dire sans passer par une phase solidifiée, impacté par un ou des courants ou jets de gaz d'étirage tel qu'un courant de vapeur ou de gaz de combustion.

Suivant un procédé connu combinant l'étirage centrifuge et l'étirage par frottement gazeux, le filet de verre fondu est introduit dans une centrifugeuse et est transformé par la force centrifuge en un grand nombre de filaments de verre fondu. Lesdits filaments sont ensuite étirés par un rideau cylindrique de gaz d'étirage qui entoure la centrifugeuse. Ce dernier procédé assure la plus grande partie de la production de fibres de verre pour l'isolation.

Pour que l'étirage par frottement gazeux soit effectif, la viscosité du verre au moment de l'étirage doit être suffisamment basse, ce qui nécessite à son tour que le gaz d'étirage soit très chaud et permet de porter et/ou de maintenir le verre à une température élevée correspondant à une viscosité basse.

De l'air tempéré issu de l'ensemble d'échange de chaleur peut ainsi aussi être utilisé pour la production d'un ou plusieurs courants gazeux d'étirage ou pour la production d'une ou plusieurs flammes d'étirage, comme décrit plus en détail dans la demande de brevet non-publiée FR1557344. Ceci permet une réduction significative de la consommation énergétique de l'étape d'étirage du procédé.

Quand la transformation du verre fondu en produit de fibre de verre comporte une étape de texturation des filaments ou des fils les contenant, de l'air tempéré peut être utilisé comme courant de gaz de texturation, et plus particulièrement en tant que jet turbulent d'air de texturation.

Dans le présent contexte, on comprend par « échange de chaleur » ou « échange thermique » entre deux fluides de températures différentes, le transfert de chaleur ou énergie thermique de l'une des deux fluides (fluide le plus chaude) vers l'autre des deux fluides (fluide le moins chaud) à travers une ou des parois sans que les deux fluides entrent en contact direct ou se mélangent.

Par « échangeur de chaleur » ou « échangeur » on comprend une installation ou un dispositif dans lequel deux fluides de températures différentes circulent dans des enceintes ou circuits distincts sans contact direct ou mélange entre les deux fluides, installations ou dispositifs dans lequel ou lesquels de la chaleur est transmise du fluide le plus chaud au fluide le moins chaud à travers une ou des parois séparant les deux enceintes ou circuits. Le terme « filament » se réfère à un filet étiré.

L'ensemble d'échange de chaleur comporte avantageusement un échangeur primaire et un échangeur secondaire. On chauffe alors de l'air par échange thermique avec des fumées évacuées du four dans l'échangeur primaire et on préchauffe le réactif dans l'échangeur secondaire par échange thermique avec l'air chaud issu de l'échangeur primaire.

Suivant une forme de réalisation, l'ensemble d'échange de chaleur comporte un échangeur primaire et un échangeur secondaire, de l'air étant chauffé par échange thermique avec des fumées évacuées du four dans l'échangeur primaire avec obtention de l'air chaud à une température entre 500°C et 800°C et le réactif de combustion est préchauffé dans l'échangeur secondaire par échange thermique avec de l'air chaud issu de échangeur primaire.

De préférence, on préchauffe au moins de l'oxydant riche dans l'échangeur secondaire en amont de son utilisation dans le four.

Le désensimage du produit de fibre de verre inclut généralement le traitement thermique du produit de fibre de verre dans un four de désensimage.

Le four de désensimage peut être chauffé par combustion, et en particulier par combustion d'un combustible avec de l'air tempéré issu de l'ensemble d'échange de chaleur. Toutefois, le four de désensimage est souvent chauffé au moyen d'éléments chauffants électriques.

La température dans le four de désensimage dépend de la nature de l'agent d'ensimage et du procédé de désensimage.

Ainsi, dans un four de désensimage par volatilisation, la température dans le four de désensimage est contrôlée de manière à permettre la volatilisation de l'agent d'ensimage, au moins en partie, sans toutefois atteindre la température d'auto-allumage de l'agent d'ensimage en présence de l'air tempéré issu de l'ensemble d'échange de chaleur.

Dans un four de désensimage par combustion, la température dans le four de désensimage est contrôlée de manière à atteindre, dans au moins une partie du four de désensimage, la température d'auto-allumage de l'agent d'ensimage en présence de l'air tempéré issu de l'échangeur secondaire.

Dans les deux cas, la température dans le four de désensimage est maintenue en dessous d'un seuil prédéterminé (Tmax) afin de limiter l'impact négatif du désensimage sur la résistance mécanique du produit de fibre de verre.

De manière analogue, la durée du traitement thermique de désensimage est régulée de manière à être suffisamment longue pour atteindre le niveau de désensimage requis sans toutefois atteindre une durée prédéterminée (Δtmax) à laquelle la résistance mécanique du produit serait réduite de manière inadmissible.

La température de désensimage par volatilisation est de préférence située dans la plage de 250°C et 380°C. La température de désensimage par combustion est avantageusement située dans la plage de 475°C et 820°C.

Suivant une forme de réalisation particulière de l'invention, le désensimage comporte une première étape de désensimage par volatilisation du produit de fibre de verre suivie d'une étape de désensimage par combustion du produit de fibre de verre. Les deux étapes successives peuvent avoir lieu dans un seul four de désensimage, voire dans deux fours successifs de désensimage. De l'air tempéré issu de l'ensemble d'échange de chaleur peut être mis en contact avec le produit de fibre de verre lors d'une des deux étapes ou pendant les deux étapes successives.

Une étape de désensimage peut être une étape de désensimage continu, c'est-à-dire une étape dans lequel le produit de fibre de verre traverse le four de désensimage de manière continue. Une étape de désensimage peut également être une étape de désensimage discontinu (en anglais : « batch »). Il est également possible de combiner une étape de désensimage discontinu et une étape de désensimage continu. En particulier, le désensimage par combustion est de préférence un désensimage continu.

Grâce à l'énergie thermique présente dans l'air tempéré issus de l'ensemble d'échange de chaleur, l'utilisation d'air tempéré lors de l'étape de désensimage suivant la présente invention permet une économie importante d'énergie de chauffage lors du désensimage et/ou une durée plus courte de l'étape de désensimage, en particulier quand le produit de fibre de verre est balayé par un courant d'air tempéré issu de l'ensemble d'échange de chaleur.. On note également que la présente invention permet de réaliser ces avantages sans impact négatif sur la résistance mécanique du produit de fibre de verre.

Après l'étape de désensimage, le produit de fibre de verre peut être soumis à une étape de finissage ou apprêtage, en particulier afin de réaliser une finition pour laquelle la présence d'ensimage sur le produit de fibre de verre serait problématique.

Ainsi, l'étape de finissage peut être ou inclure une étape de teinture, le désensimage permettant une meilleure couverture du produit avec la teinture et/ou une meilleure fixation de la teinture sur le produit. La teinture est notamment intéressante pour des produits textiles de fibre de verre purs ou métissés. Les produits textiles de fibre de verre inclus, les tissus tissés de fibres de verre, les tissus non-tissés de fibre de verre, les tissus tricotés de fibre de verre, etc.

L'étape de finissage peut également être ou inclure l'application d'un agent adhésif sur le produit de fibre de verre. Le désensimage permet une meilleure couverture du produit avec l'agent adhésif et/ou une meilleure fixation de l'agent adhésif sur le produit de verre, l'agent adhésif permettant ensuite une meilleure adhésion entre le produit de verre et une autre matière, souvent appelé matrice. L'application d'un agent adhésif est notamment intéressante pour des produits de renforcement de fibre verre, comme notamment des fibres ou fils de renforcement et des tissus de renforcement. L'agent adhésif est généralement choisi en fonction de la nature de la matrice. Les produits de renforcement de fibres de verre trouvent un très grand nombre d'applications, comme par exemple : le renforcement de garnitures de freins, de cartes de circuits imprimés, de bardeaux de toiture, de pièces moulées par injection, comme revêtement de tuyaux ou réservoirs, etc. Pour certaines matrices/certaines applications, le désensimage permet en tant que tel une adhésion suffisante entre le produit de fibre de verre et la matrice.

L'étape de finissage peut également être ou inclure l'application d'une colle sur le produit de fibre de verre afin de coller plusieurs produits de fibre de verre l'un à l'autre ou de coller ensemble les fibres de verre présents dans le produits de fibre de verre, comme par exemple dans le cas d'une nappe de filtration de fibre de verre.

Un autre exemple d'une étape de finissage est l'hydrofugation du produit de fibre de verre.

Afin d'améliorer l'homogénéité du filet de verre et ainsi l'homogénéité et la qualité du ou des filaments obtenus par étirage du filet, le verre fondu peut être affiné avant le filage.

La fusion et l'affinage du verre peuvent alors avoir lieu dans une même chambre de fusion-affinage du four, la zone d'affinage étant alors située en aval de la zone de fusion et en amont de la sortie de verre fondu dans le sens d'écoulement du verre.

La fusion et l'affinage peuvent également avoir lieu dans des chambres séparées du four de fusion, la chambre d'affinage étant située en aval de la chambre de fusion. On considère alors que le four de fusion englobe ces deux chambres.

Suivant une forme de réalisation, le verre fondu est extrudé immédiatement à la sortie du four de fusion, par exemple à travers une filière située à la sortie de verre fondu du four de fusion.

Suivant une forme de réalisation alternative, le verre fondu issu du four est transporté par une canalisation du four de fusion, c'est-à-dire d'une sortie de verre fondu du four, vers une filière pour le filage du verre fondu en filet(s).

Dans le présent contexte, le terme « filière » se réfère à tout dispositif de filage permettant de réaliser un ou plusieurs filets de verre fondu à partir d'un bain de verre fondu. La filière peut se présenter sous plusieurs formes de réalisation, telle qu'une plaque métallique percée. La filière peut elle-même être chauffée, par exemple de manière électrique, afin d'éviter que la ou les perforations d'extrusion/de filage soient partiellement ou totalement bouchées par du verre (partiellement) solidifié, voire cristallisé.

Comme indiqué ci-dessus, le procédé suivant l'invention est utile pour la production d'une grande variété de produits de fibre de verre, notamment pour la production de fils de verre, de produits textiles de fibres de verre, de produits de renforcements de verre et de produits renforcé au moyen de fibre de verre, des géotextiles de fibre de verre, des filtres de fibres de verre, ou encore les produits d'isolation acoustique et/ou d'isolation thermique et/ou de protection contre l'incendie à base de fibre de verre.

La présente invention concerne également une installation apte à être utilisée pour la mise en œuvre du procédé de fabrication suivant l'invention.

L'installation comprend un four de fusion de verre et une unité de transformation pour la transformation de verre fondu en un produit de fibre de verre.

Le four de fusion de l'installation est destiné à produire du verre fondu à partir de matières solides. Il comporte une sortie de verre fondu, une sortie de fumées et au moins un brûleur pour la combustion d'un combustible avec un oxydant riche, c'est-à-dire un oxydant ayant une teneur en oxygène de 80%vol à 100%vol

Le four de fusion comporte généralement plusieurs tels brûleurs.

Comme déjà indiqué précédemment, le four de fusion peut également comporter d'autres dispositifs de chauffage en complément du au moins un brûleur susmentionné.

L'unité de transformation de l'installation comporte un dispositif, appelé filière, pour le filage de verre fondu issu du four de fusion en au moins un filet, la filière étant plus particulièrement fluidiquement reliée à la sortie de verre fondu du four de fusion.

L'unité de transformation comporte également un dispositif d'étirage pour l'étirage du au moins un filet issu de la filière en un ou plusieurs filaments, un ensimeur pour l'ensimage du ou des filaments, un collecteur pour la collection du ou des filaments ensimés, un ensemble pour la production d'un produit de fibre de verre à partir du ou des filaments ensimés collectés et un four de désensimage pour le désensimage du produit de fibre de verre.

L'unité de transformation comporte optionnellement aussi un sécheur pour le séchage du ou des filaments et/ou une enceinte de texturation du ou des filaments ou de fils les contenant.

Le dispositif d'étirage de l'installation est avantageusement adapté pour la mise en œuvre d'un quelconque des procédés d'étirage mentionné ci-dessus. Ainsi, le dispositif d'étirage peut comporter :
- un ou plusieurs dispositifs d'étirage mécanique, telle que des bobinoirs ou appareils analogues, ou
- un ou plusieurs brûleurs pour l'étirage à flamme, ou
- un ou plusieurs générateurs de courants de gaz pour l'étirage à gaz, sachant que lesdits générateurs de courants de gaz peuvent être des brûleurs générant des courants de gaz de combustion utilisés en tant que courants de gaz d'étirage.

Le dispositif d'étirage peut également comporter une combinaison d'une centrifugeuse pour l'étirage centrifuge avec un ou plusieurs générateurs de courants de gaz pour l'étirage à gaz des filets issus de la centrifugeuse, lesdits générateurs pouvant, comme indiqué ci-dessus, être des brûleurs.

Quand le dispositif d'étirage produit un ou plusieurs filaments continus, le collecteur peut être un bobinoir ou autre dispositif pour l'enroulement du ou des filaments. Il est ainsi possible d'utiliser un bobinoir à la fois en tant que dispositif d'étirage mécanique et collecteur.

Le collecteur peut également être un convoyeur sur lequel le ou les filaments sont collectés. Un tel convoyeur est particulièrement indiqué quand le ou les filets sont étirés en un grand nombre de filaments en particulier en un grand nombre de filaments de faible longueur.

L'installation suivant l'invention est conçue de manière à permettre une efficacité énergétique élevée du four de fusion ainsi qu'une synergie énergétique entre le four de fusion et l'unité de transformation située en aval du four.

A cette fin, l'installation comporte un ensemble d'échange de chaleur pour le chauffage d'air par échange thermique avec des fumées évacuées du four et pour le préchauffage d'un réactif de combustion par échange thermique avec l'air chaud ainsi obtenu. On obtient ainsi du réactif de combustion préchauffé et de l'air tempéré. L'ensemble d'échange de chaleur est fluidiquement relié à une source d'air, à la sortie de fumées du four et à une source de réactif de combustion, cette dernière source étant une source d'oxydant riche ou une source de combustible gazeux. L'ensemble d'échange de chaleur présente une sortie d'air tempéré et une sortie de réactif préchauffé.

La sortie de réactif de combustion préchauffé de l'ensemble d'échange de chaleur est fluidiquement reliée à un ou plusieurs brûleurs du four de fusion afin de permettre l'utilisation du réactif préchauffé comme réactif de combustion dans le four de fusion.

Suivant l'invention, la sortie d'air tempéré de l'ensemble d'échange de chaleur est fluidiquement reliée au four de désensimage de manière à permettre une mise en contact du produit de fibre de verre avec de l'air tempéré à l'intérieur du four de désensimage et/ou de manière à permettre l'utilisation d'air tempéré issu de l'ensemble d'échange de chaleur comme comburant pour le chauffage du four de désensimage par combustion.

De préférence, la sortie d'air tempéré de l'ensemble d'échange de chaleur est fluidiquement reliée au four de désensimage de manière permettre une mise en contact du produit de fibre de verre avec de l'air tempéré à l'intérieur du four de désensimage.

Etant donné le débit et la température de l'air tempéré à la sortie de l'échangeur secondaire, l'utilisation de cet air tempéré pour promouvoir le désensimage thermique du produit de fibre de verre s'est avérée particulièrement efficace et permet ainsi d'améliorer significativement l'efficacité énergétique du procédé global.

Dans le présent contexte, deux éléments sont « fluidiquement reliés » quand ils sont connectés par un conduit ou une canalisation de manière à permettre l'écoulement d'un fluide d'un des deux éléments vers l'autre des deux éléments à travers ce conduit ou cette canalisation.

La source d'air peut, par exemple, être une soufflante d'air.

L'ensemble d'échange de chaleur permet de préférence au moins le préchauffage d'un oxydant riche, voire le préchauffage d'un oxydant riche et d'un combustible gazeux.

La source d'oxydant riche peut, par exemple, être une unité de séparation des gaz de l'air ou un pipeline ou réservoir d'un oxydant riche liquéfié.

L'ensemble d'échange de chaleur comporte de manière utile un premier échangeur de chaleur dit « échangeur primaire » ou « échangeur de chaleur primaire » pour l'échange thermique entre les fumées évacuées du four de fusion et l'air à chauffer, ainsi qu'un second échangeur de chaleur dit « échangeur de chaleur secondaire » ou « échangeur secondaire » pour l'échange thermique entre l'air chaud issu de l'échangeur primaire et le réactif à préchauffer. Dans ce cas, l'échangeur primaire est fluidiquement relié à la source d'air et à la sortie de fumées du four de fusion. L'échangeur secondaire est fluidiquement relié à la source de réactif à préchauffer. L'échangeur secondaire présente également la sortie de réactif de combustion préchauffé et la sortie d'air tempéré.

Suivant une forme de réalisation permettant le préchauffage d'un oxydant riche et d'un combustible gazeux, l'ensemble d'échange de chaleur comporte un premier et un deuxième échangeur secondaire, le premier échangeur secondaire étant fluidiquement relié à une source d'oxydant riche et le deuxième échangeur secondaire étant fluidiquement relié à une source d'un combustible gazeux.

Comme déjà indiqué ci-dessus, l'installation peut comporter deux échangeurs secondaires en amont du brûleur : un échangeur secondaire pour le préchauffage d'un oxydant riche et un échangeur secondaire pour le préchauffage d'un combustible gazeux, le brûleur recevant de l'oxydant riche préchauffé du premier des deux échangeurs secondaires et du combustible gazeux préchauffé du second des deux échangeurs secondaires. Ces deux échangeurs secondaires peuvent être disposés en série ou en parallèle par rapport à l'écoulement de l'air chaud issu de l'échangeur primaire.

En fonction de la nature du produit de fibre de verre, l'ensemble pour la production d'un produit de fibre de verre à partir du ou des filaments collectés peut inclure un ou plusieurs des équipements suivants : les équipements de coupe, les équipements de filature, les équipements de torsion, les équipements de texturation, les équipements de guipage, les équipements de tressage, les équipements de tissage et les équipements de tricotage.

En fonction de l'utilisation envisagée du produit de fibre de verre, l'installation suivant l'invention peut comporter comportant une unité de finissage en aval du four de désensimage, par exemple afin d'effectuer un des procédés de finissage décrits ci-dessus en rapport avec le procédé suivant l'invention.

Le four peut être un four de fusion/affinage tel que décrit ci-dessus.

La filière peut être située à la sortie de verre fondu du four de fusion. L'installation peut également comporter une canalisation pour le transport de verre fondu de cette sortie de verre fondu vers la filière.

L'invention couvre également une installation telle que décrite ci-dessus qui correspond également à une installation telle que définie dans la demande de brevet non-publiée FR1557344.

Ainsi, la sortie d'air tempéré de l'ensemble d'échange de chaleur peut également être fluidiquement reliée à un ou plusieurs des dispositifs suivants de l'unité de transformation :
- le dispositif d'étirage : pour la réalisation d'une flamme d'étirage ou d'un courant gazeux d'étirage au moyen d'air tempéré issu de l'ensemble d'échange de chaleur ;
- l'encolleur, si présent : pour l'utilisation d'air tempéré issu de l'ensemble d'échange de chaleur comme agent de pulvérisation du liant ;
- la chambre de réticulation, si présente : pour l'utilisation d'air tempéré issu de l'ensemble d'échange de chaleur pour la promotion de la réticulation, en particulier par la mise en contact de filaments encollés avec de l'air tempéré issu de l'ensemble d'échange de chaleur ;
- le sécheur, si présent : pour l'utilisation d'air tempéré issu de l'ensemble d'échange de chaleur comme agent de séchage en contact avec le ou les filaments ou de fils les contenant ;
- l'enceinte de texturation, si présente : pour l'utilisation d'air tempéré issu de l'ensemble d'échange de chaleur comme courant de gaz de texturation, et plus particulièrement en tant que jet turbulent d'air de texturation.

Suivant une forme de réalisation préférée d'une telle installation, le dispositif d'étirage comporte un brûleur d'étirage pour la réalisation d'une flamme d'étirage ou pour la réalisation d'un courant gazeux d'étirage par la combustion d'un combustible avec de l'air tempéré issu de l'ensemble d'échange de chaleur, ledit brûleur d'étirage étant alors fluidiquement relié avec la sortie d'air tempéré de l'ensemble d'échange de chaleur.

Suivant une forme de réalisation particulièrement préférée, le dispositif d'étirage comporte une centrifugeuse pour l'étirage centrifuge du ou des filets, ainsi qu'un brûleur d'étirage pour l'étirage à gaz des filaments issus de la centrifugeuse. Dans ce cas, le brûleur d'étirage est avantageusement annulaire, apte à générer un courant gazeux d'étirage autour de la centrifugeuse et fluidiquement relié à la sortie d'air tempéré de l'ensemble d'échange de chaleur pour la fourniture d'air tempéré comme comburant au brûleur d'étirage.

L'installation suivant l'invention comporte de manière utile une hotte entourant le dispositif d'étirage. Cette hotte peut également entourer l'ensimeur et/ou le sécheur. Quand l'installation est destinée à produire un grand nombre de filaments courts, la hotte permet d'éviter ou de limiter l'envol de filaments pendant le fonctionnement de l'installation. La hotte permet aussi, plus généralement, de mieux contrôler les conditions d'étirage, voire d'ensimage et/ou de séchage.

Quand l'installation est destinée à produire un grand nombre de filaments courts, le collecteur est de préférence situé en dessous ou en bas de la hotte.

L'installation suivant l'invention peut être utile pour la production d'une grande gamme de produits de fibre de verre, notamment pour la production de fils de verre, de produits textiles de fibres de verre, de produits de renforcements de verre et de produits renforcé au moyen de fibre de verre, des géotextiles de fibre de verre, des filtres de fibres de verre, ou encore les produits d'isolation acoustique et/ou d'isolation thermique et/ou de protection contre l'incendie à base de fibre de verre, etc.

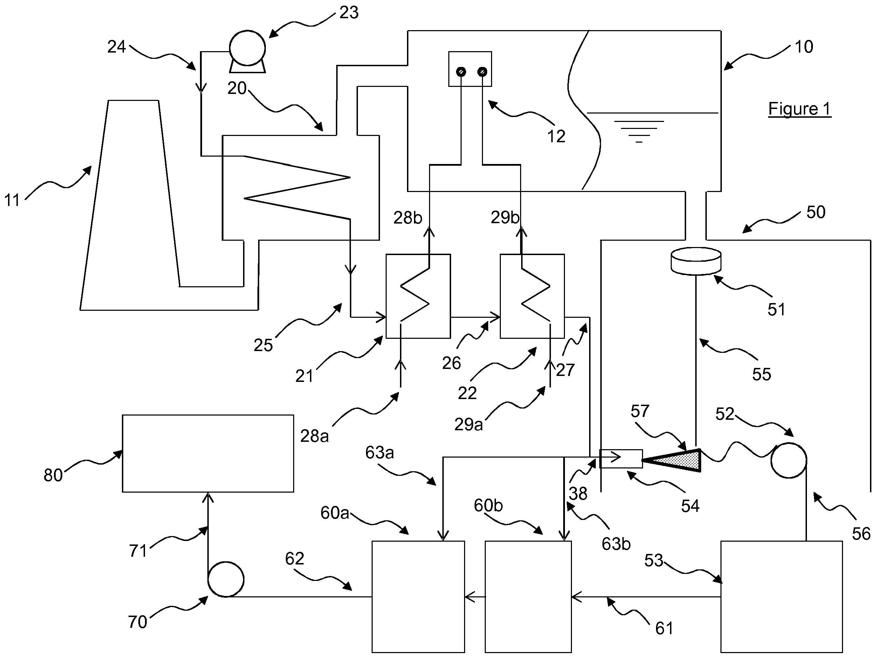

La présente invention et ses avantages sont illustrés dans l'exemple ci-après, référence étant faite à la figure 1, qui est une représentation schématique d'un procédé et d'une installation pour la fabrication d'un fil continu de fibre de verre et plus particulièrement pour un fil de renforcement ainsi que pour la fabrication d'un produit renforcé au moyen de ce fil de renforcement. Un tel fil de fibre de verre peut également être utilisé pour la production de tissus de fibres de verre ou pour utilisation en tant que fibre de renforcement.

L'installation illustrée dans la figure 1 comporte un four de fusion de verre 10 chauffé par un nombre de brûleurs 12 (un seul brûleur est montré dans la figure). A cette fin, de l'oxydant riche 28a, typiquement un gaz contenant entre 95%vol et 100%vol d'oxygène, et un combustible gazeux 29a, tel que le gaz naturel, sont fournis auxdits brûleurs 12.

Une filière 51 chauffée par des moyens électriques est située à la sortie de verre fondu du four 10. Le filet de verre fondu 55 produit par la filière 51 se refroidit à l'intérieur de la hotte 50 de manière à ce qu'on obtienne en bas dudit filet une baguette de verre solidifié. Le brûleur d'étirage 54 génère une flamme d'étirage 57 au niveau de l'extrémité inférieure de cette baguette à l'intérieur de la hotte 50. La flamme d'étirage 57 rend malléable l'extrémité de la baguette. Le verre ainsi malléable est étiré en un filament continu 56 par les gaz de combustion de la flamme 57. Le filament est ensuite ensimé par le tambour d'ensimage 52 avant d'entrer dans le dispositif de filature 53. Le dispositif produit des fils de fibre de verre par filature de plusieurs filaments ensimés 56. Le fil de verre 61 ainsi obtenu est introduit dans un premier four de désensimage 60b, Pour le désensimage partiel par volatilisation du fil 61. Le fil partiellement désensimé est ensuite introduit dans un deuxième four de désensimage 60a dans lequel le fil est soumis à un désensimage par combustion. Le fil désensimé 62 est ensuite couvert par un agent adhésif ou moyen du tambour 70 pour ensuite être fourni à une unité pour la production de produits renforcés de fils de verre où le fil sera soit intégré dans une matrice à renforcer soit fixé sur une matière à renforcer.

Suivant l'invention, les fumées ou gaz de combustion générés par la combustion du combustible 29a avec l'oxydant riche 28a sont évacués du four de fusion 10 et introduits dans un échangeur primaire 20 afin de chauffer de l'air comprimé 24 fourni par le compresseur 23. En aval de l'échangeur primaire 20, les fumées sont évacuées à travers la cheminée 11, typiquement après avoir subies un traitement d'élimination de polluants. L'air chaud 25 issu de l'échangeur primaire 20 est introduit dans un premier échangeur secondaire 21 pour le préchauffage de l'oxydant riche 28a et ensuite, sous forme d'air partiellement tempéré 26 dans un deuxième échangeur secondaire 22 pour le préchauffage du combustible gazeux 29a. L'oxydant riche préchauffé 28b issu du premier échangeur secondaire 21 et le combustible gazeux préchauffé 29b issu du deuxième échangeur secondaire 22 sont fournis aux brûleurs 12 comme réactifs de combustion.

Ceci permet une première économie d'énergie très importante dans le procédé de fabrication suivant l'invention.

La chaleur résiduelle présente dans l'air tempéré 27 issu des échangeurs secondaires 21, 22 est exploitée afin d'améliorer l'efficacité énergétique du procédé de transformation en aval du four de fusion 10.

Ainsi, de l'air tempéré 27 est introduite dans les fours de désensimage 60b et 60a, dans lesquels, l'air tempéré 63b et 63a balaye les fils de verre. Dans le four de désensimage par volatilisation 60b, l'air tempéré 63b évacue ainsi les composants volatilisés du four de désensimage 60b. Dans le four de désensimage par combustion 60a, l'air tempéré 63a agit en tant que comburant pour la combustion de l'ensimage et évacue les produits de combustion du four de désensimage 60a.

Dans la forme de réalisation illustrée, les fours de désensimage 60a et 60b sont chauffés de manière électrique. Il est également possible de chauffer un four de désensimage au moins partiellement par combustion.

Dans ce cas, il est avantageux d'utiliser de l'air tempéré issu de l'ensemble d'échange de chaleur comme comburant pour le chauffage du four de désensimage.

Une autre partie 38 de l'air tempéré 27 est utilisée comme comburant dans le brûleur d'étirage 54 qui génère la flamme d'étirage 57.

La forme de réalisation illustrée peut, par exemple, avantageusement être mise en œuvre ave un four de fusion qui produit 100 tpd (tonnes par jour) de fibre de renforcement. Le four de fusion est chauffé au moyen de 10 brûleurs à oxygène délivrant chacun une puissance de 500 kW en moyenne. Un appoint en énergie électrique de l'ordre 100 kWe à 2 MWe peut être nécessaire selon les conditions de production.

Le verre fondu s'écoule dans 4 canaux de distribution qui sont maintenus à température à l'aide 50 brûleurs au gaz par canal.

Les fumées de combustion sortent du four de fusion à 1350°C et réchauffent l'air à une température de 710°C. Les 500 Nm³/h de gaz naturel sont préchauffés à 450°C et les 1000 Nm³/h d'oxygène sont préchauffés à 550°C.

Les 3000 Nm³/h d'air sortent refroidis à 400°C à la sortie des échangeurs secondaires.

En sortie de chaque canal, le verre s'écoule à travers des orifices dans une filière chauffée électriquement formant ainsi une rangée 100 filaments.

Les filaments solidifiés sont ensuite étirés par des gaz chauds émanant d'une rangée de brûleurs d'étirage.

Une série de 2 à 3 tambours d'ensimage sont disposés par canal pour l'ensimage des filaments continus ainsi obtenus.

Les filaments sont ensuite, en fonction de leur utilisation envisagée, transformés en produits de fibre de verre, comme par exemple, filature avec obtention de fils de verre, tissage avec obtention de tissus de verre, etc., transformation qui nécessite la présence d'ensimage sur les filaments.

Le produit de fibre de verre est ensuite introduit successivement dans les deux fours de désensimage, d'abord dans le four de désensimage par volatilisation à des températures entre 250°C et 380°C pour un désensimage partiel du produit et ensuite dans le four de désensimage par combustion, à des températures plus élevées entre 475°C et 820°C, pour le désensimage final du produit.

Le produit désensimé est ensuite, souvent après un finissage comme décrit précédemment, utilisé pour son application finale, par exemple en tant que produit de renforcement.

Les fours de désensimage sont alimentés par un courant d'air tempéré à 300°C qui balaye le produit de fibre de verre et évacue les produits de désensimage du four, l'air tempéré étant partiellement refroidi par perte de chaleur (généralement de 10°C à 100°C) pendant le transport entre l'ensemble d'échange de chaleur et les fours de désensimage.

L'utilisation d'air tempéré issu de l'ensemble d'échange de chaleur pour le désensimage du produit de fibre de verre, permet une optimisation importante du procédé d'ensimage en baissant de manière significative la consommation énergétique des fours de désensimage et/ou en réduisant la durée du désensimage et ceci avec un minimum d'équipement supplémentaire, essentiellement des canalisations connectant la sortie d'air tempéré de l'ensemble d'échange de chaleur et les fours de désensimage.

## Revendications

1. Procédé de fabrication d'un produit de fibre de verre (61, 62) dans lequel du verre fondu est transformé en produit de fibre de verre (61, 62) par :
∘ filage du verre fondu en au moins un filet (55),
∘ étirage du au moins un filet en un ou plusieurs filaments (56),
∘ ensimage du ou des filaments (56),
∘ collection du ou des filaments (56),
∘ production du produit de fibre de verre (61) au moyen du ou des filaments ensimés collectés, et
∘ désensimage thermique du produit de fibre de verre (61),
procédé dans lequel le verre fondu est produit dans un four de fusion (10) chauffé par combustion d'un combustible (29a) avec un oxydant riche (28a) ayant une teneur en oxygène de 80%vol à 100%vol, avec génération de chaleur et des fumées, lesdites fumées générées étant évacuées du four de fusion à une température entre 1000°C et 1600°C,
le procédé étant **caractérisé en ce que** :
∘ on chauffe de l'air (24) par échange thermique avec des fumées évacuées dans un ensemble d'échange de chaleur (20, 21, 22) avec obtention d'air chaud (25),
∘ on préchauffe un réactif (28a, 29a) choisi parmi les oxydants riches et les combustibles gazeux par échange thermique avec l'air chaud (25) dans l'ensemble d'échange de chaleur (20, 21, 22) avec obtention d'une part de réactif préchauffé (28b, 29b) et d'autre part d'air tempéré (27) à une température entre 200°C et 500°C,
∘ on utilise le réactif préchauffé (28a, 29a) comme réactif de combustion dans le four de fusion (10),
∘ de l'air tempéré (27) issu de l'ensemble d'échange de chaleur (20, 21, 22) est mis en œuvre lors de l'étape de désensimage thermique, de préférence par la mise en contact d'air tempéré (27) avec le produit de fibre de verre (61) lors du désensimage afin de promouvoir la volatilisation et/ou la combustion de l'ensimage présent sur le produit de fibre de verre (61).

2. Procédé suivant la revendication 1, dans lequel l'ensemble d'échange de chaleur (20, 21, 22) comporte un échangeur primaire (20) et un échangeur secondaire (21,22), de l'air (24) étant chauffé par échange thermique avec des fumées évacuées du four dans l'échangeur primaire (20) avec obtention de l'air chaud (25) à une température entre 500°C et 800°C et le réactif de combustion (28a, 29a) est préchauffé dans l'échangeur secondaire (21, 22) par échange thermique avec de l'air chaud (25) issu de l'échangeur primaire (20).

3. Procédé suivant la revendication 1 ou 2, dans laquelle l'étape de désensimage thermique comporte une étape de désensimage par volatilisation et/ou une étape de désensimage par combustion.

4. Procédé suivant l'une des revendications 1 à 3, dans lequel l'étape de désensimage comporte une étape de désensimage par volatilisation à une température entre 250°C et 380°C.

5. Procédé suivant l'une des revendications 1 à 4, dans lequel l'étape de désensimage comporte une étape de désensimage par combustion à une température entre 475°C et 820°C.

6. Procédé suivant l'une des revendications précédentes, dans lequel le produit de fibre de verre désensimé est soumis à une étape de finissage.

7. Procédé suivant l'une des revendications précédentes, dans lequel le produit de fibre de verre (61) est choisi parmi les fils, les produits textiles, les produits de renforcement, les produits renforcés au moyen de fibres de verre, les produits d'isolation acoustiques, les produits d'isolation thermique et les produits de protection contre l'incendie.

8. Installation comprenant un four de fusion de verre (10) et une unité de transformation pour la transformation de verre fondu en un produit de fibre de verre (61, 62) :
∘ le four de fusion (10) comportant une sortie de verre fondu, une sortie de fumées et au moins un brûleur (12) pour la combustion d'un combustible (29a) avec un oxydant riche (28a) ayant une teneur en oxygène de 80%vol à 100%vol ;
∘ l'unité de transformation comportant :
▪ une filière (51) pour le filage de verre fondu issu du four de fusion (10) en au moins un filet (55), ladite filière (51) étant fluidiquement reliée à la sortie de verre fondu du four (10);
▪ un dispositif d'étirage (54) pour l'étirage d'au moins un filet (55) issu de la filière (51) en un ou plusieurs filaments (56) ;
▪ un ensimeur pour l'ensimage du ou des filaments (56) ;
▪ un collecteur pour la collection du ou des filaments (56) ensimés ;
▪ un ensemble (53) pour la production d'un produit de fibre de verre (61) à partir du ou des filaments (56) collectés ; et
▪ un four de désensimage (60a, 60b) pour le désensimage du produit de fibre de verre (61).
l'installation étant **caractérisée :**
• **en ce qu'**elle comporte un ensemble d'échange de chaleur (20, 21, 22) pour le chauffage d'air (24) par échange thermique avec des fumées évacuées du four de fusion (10) et pour le préchauffage d'un réactif de combustion (28a, 29a) par échange thermique avec l'air chaud (25) avec obtention de réactif de combustion (28b, 29b) préchauffé et d'air tempéré (27), l'ensemble d'échange de chaleur (20, 21, 22) étant fluidiquement relié à une source d'air (23), à la sortie de fumées du four de fusion (10) et à une source d'un réactif de combustion choisi entre de l'oxydant riche et du combustible gazeux, la sortie de réactif de combustion préchauffé de l'échangeur secondaire étant fluidiquement relié au brûleur (12) du four de fusion (10) et,
• **en ce que** l'ensemble d'échange de chaleur (20, 21, 22) présente une sortie de réactif de combustion préchauffé fluidiquement reliée au brûleur (12) du four de fusion (10) ainsi qu'une sortie d'air tempéré (27) fluidiquement reliée au four de désensimage (60a, 60b) afin de mettre de l'air tempéré (27) en contact avec le produit de fibre de verre (61) dans le four de désensimage et/ou d'utiliser de l'air tempéré comme comburant pour le chauffage du four de désensimage (60a, 60b) par combustion.

9. Installation suivant la revendication 8, dans laquelle la sortie d'air tempéré (27) de l'ensemble d'échange de chaleur (20,21,22) est fluidiquement reliée au four de désensimage (60a, 60b) afin de mettre de l'air tempéré (27) en contact avec le produit de fibre de verre (61) dans le four de désensimage (60a, 60b).

10. Installation suivant l'une des revendications 8 et 9, dans laquelle l'ensemble d'échange de chaleur (20, 21,22) comporte un échangeur primaire (20) pour l'échange thermique entre les fumées évacuées du four (10) et l'air (24) et un échangeur secondaire (21, 22) pour l'échange thermique entre l'air chauffé (25) issu de l'échangeur primaire (20) et le réactif de combustion (28a, 29a).

11. Installation suivant l'une quelconque des revendications 8 à 9, dans laquelle l'ensemble d'échange de chaleur (20, 21, 22) est fluidiquement relié à une source de l'oxydant riche (28a), de préférence à une source de l'oxydant riche et à une source du combustible gazeux (29a).

12. Installation suivant l'une quelconque des revendications 8 à 11 dans laquelle la sortie d'air tempéré (27) est fluidiquement reliée à un four de désensimage par volatilisation et/ou à un four de désensimage par combustion et/ou à un four de désensimage par volatilisation et combustion (60a, 60b).

13. Installation suivant l'une quelconque des revendications 8 à 12, dans laquelle un ensemble pour la production d'un produit de fibre de verre à partir du ou des filaments (56) collectés inclut au moins un équipement choisi parmi : les équipements de coupe, les équipements de filature (56), les équipements de torsion, les équipements de texturation, les équipements de guipage, les équipements de tressage, les équipements de tissage et les équipements de tricotage.

14. Installation suivant l'une quelconque des revendications 8 à 13 comportant une unité de finissage en aval du four de désensimage (60a, 60b).

## Patentansprüche

1. Verfahren zur Herstellung eines Glasfaserprodukts (61, 62), wobei geschmolzenes Glas in ein Glasfaserprodukt (61, 62) umgewandelt wird durch:
o Spinnen des geschmolzenen Glases in mindestens einen Faden (55),
o Strecken des mindestens einen Fadens in ein oder mehrere Filamente (56),
o Schlichten des oder der Filamente (56),
o Sammeln des oder der Filamente (56),
o Produzieren des Glasfaserprodukts (61) unter Verwendung des oder der gesammelten, geschlichteten Filamente, und
o thermisches Entschlichten des Glasfaserprodukts (61),
Verfahren, bei dem das geschmolzene Glas in einem Schmelzofen (10) produziert wird, der durch Verbrennung eines Brennstoffs (29a) mit einem reichen Oxidationsmittel (28a), das einen Sauerstoffgehalt von 80 Vol.-% bis 100 Vol.-% aufweist, samt Erzeugung von Wärme und Rauchgasen erwärmt wird, wobei die erzeugten Rauchgase bei einer Temperatur zwischen 1000 °C und 1600 °C aus dem Schmelzofen abgeführt werden,
wobei das Verfahren **dadurch gekennzeichnet ist, dass**:
o Luft (24) durch Wärmeaustausch mit abgeführten Rauchgasen in einer Wärmeaustauschanordnung (20, 21, 22), samt Erhalt von Heißluft (25) erwärmt wird,
o ein Reagenz (28a, 29a), ausgewählt aus den reichen Oxidationsmitteln und den gasförmigen Brennstoffen durch Wärmeaustausch mit Heißluft (25) in der Wärmeaustauschanordnung (20, 21, 22), samt Erhalt einerseits von vorgewärmtem Reagenz (28b, 29b) und andererseits von temperierter Luft (27) bei einer Temperatur zwischen 200 °C und 500 °C vorgewärmt wird,
o das vorgewärmte Reagenz (28a, 29a) als Verbrennungsreagenz in dem Schmelzofen (10) verwendet wird,
o temperierte Luft (27) aus der Wärmeaustauschanordnung (20, 21, 22) in dem Schritt zur thermischen Entschlichtung, bevorzugt durch Inkontaktbringen von temperierter Luft (27) mit dem Glasfaserprodukt (61) während der Entschlichtung eingesetzt wird, um die Verflüchtigung und/oder Verbrennung der auf dem Glasfaserprodukt (61) vorhandenen Schlichte zu fördern.

2. **Verfahren** nach Anspruch 1, wobei die Wärmeaustauschanordnung (20, 21, 22) einen Primäraustauscher (20) und einen Sekundäraustauscher (21,22) umfasst, wobei Luft (24), die durch Wärmeaustausch mit aus dem Ofen in dem Primäraustauscher (20) abgeführten Rauchgasen, samt Erhalt von Heißluft (25) bei einer Temperatur zwischen 500 °C und 800 °C erwärmt wird und das Verbrennungsreagenz (28a, 29a) im Sekundäraustauscher (21, 22) durch Wärmeaustausch mit Heißluft (25) aus dem Primäraustauscher (20) vorgewärmt wird.

3. Verfahren nach Anspruch 1 oder 2, wobei der Schritt zur thermischen Entschlichtung einen Schritt zur Entschlichtung durch Verflüchtigung und/oder einen Schritt zur Entschlichtung durch Verbrennung umfasst.

4. Verfahren nach einem der Ansprüche 1 bis 3, wobei der Schritt zur Entschlichtung einen Schritt zur Entschlichtung durch Verflüchtigung bei einer Temperatur zwischen 250 °C und 380 °C umfasst.

5. Verfahren nach einem der Ansprüche 1 bis 4, wobei der Schritt zur Entschlichtung einen Schritt zur Entschlichtung durch Verbrennung bei einer Temperatur zwischen 475 °C und 820 °C umfasst.

6. Verfahren nach einem der vorstehenden Ansprüche, wobei das entschlichtete Glasfaserprodukt einem Endbearbeitungsschritt unterzogen wird.

7. Verfahren nach einem der vorstehenden Ansprüche, wobei das Glasfaserprodukt (61) ausgewählt ist aus Garnen, Textilprodukten, Verstärkungsprodukten, mittels Glasfaser verstärkten Produkten, Schalldämmprodukten, Wärmedämmprodukten und Brandschutzprodukten.

8. Anlage, umfassend einen Glasschmelzofen (10) und eine Umwandlungseinheit zur Umwandlung von geschmolzenem Glas in ein Glasfaserprodukt (61, 62):
o wobei der Schmelzofen (10) einen Ausgang für geschmolzenes Glas, einen Ausgang für Rauchgase und mindestens einen Brenner (12) zur Verbrennung eines Brennstoffs (29a) mit einem reichen Oxidationsmittel (28a) umfasst, das einen Sauerstoffgehalt von 80 Vol.-% bis 100 Vol.-% aufweist;
o wobei die Umwandlungseinheit umfasst:
▪ eine Düse (51) zum Spinnen von geschmolzenem Glas aus dem Schmelzofen (10) in mindestens einen Faden (55), wobei die Düse (51) fluidisch mit dem Ausgang für geschmolzenes Glas des Ofens (10) verbunden ist;
▪ eine Streckvorrichtung (54) zum Strecken mindestens eines Fadens (55) aus der Düse (51) in ein oder mehrere Filamente (56);
▪ einen Schlichter zum Schlichten des oder der Filamente (56);
▪ einen Sammler zum Sammeln des oder der geschlichteten Filamente (56);
▪ eine Anordnung (53) zur Produktion eines Glasfaserprodukts (61) aus dem oder den gesammelten Filamenten (56); und
▪ einen Entschlichtungsofen (60a, 60b) zur Entschlichtung des Glasfaserprodukts (61).
wobei die Anlage **dadurch gekennzeichnet ist:**
• **dass** sie eine Wärmeaustauschanordnung (20, 21, 22) zum Erwärmen von Luft (24) durch Wärmeaustausch mit aus dem Schmelzofen (10) abgeführten Rauchgasen und zum Vorwärmen eines Verbrennungsreagenzes (28a, 29a) durch Wärmeaustausch mit Heißluft (25) samt Erhalt von vorgewärmtem Verbrennungsreagenz (28b, 29b) und temperierter Luft (27) umfasst, wobei die Wärmeaustauschanordnung (20, 21, 22) fluidisch mit einer Luftquelle (23), mit dem Ausgang für Rauchgase des Schmelzofens (10) und mit einer Quelle eines Verbrennungsreagenzes, ausgewählt aus reichem Oxidationsmittel und gasförmigem Brennstoff, verbunden ist, wobei der Ausgang für vorgewärmtes Verbrennungsreagenz aus dem Sekundäraustauscher fluidisch mit dem Brenner (12) des Schmelzofens (10) verbunden ist und,
• dadurch, dass die Wärmeaustauschanordnung (20, 21, 22) einen Ausgang für vorgewärmtes Verbrennungsreagenz aufweist, der fluidisch mit dem Brenner (12) des Schmelzofens (10) verbunden ist, sowie einen Ausgang für temperierte Luft (27), der fluidisch mit dem Entschlichtungsofen (60a, 60b) verbunden ist, um temperierte Luft (27) mit dem Glasfaserprodukt (61) in dem Entschlichtungsofen in Kontakt zu bringen und/oder temperierte Luft als Oxidationsmittel zum Erwärmen des Entschlichtungsofens (60a, 60b) durch Verbrennung zu verwenden.

9. Anlage nach Anspruch 8, wobei der Ausgang für temperierte Luft (27) der Wärmeaustauschanordnung (20,21,22) fluidisch mit dem Entschlichtungsofen (60a, 60b) verbunden ist, um temperierte Luft (27) mit dem Glasfaserprodukt (61) in dem Entschlichtungsofen (60a, 60b) in Kontakt zu bringen.

10. Anlage nach einem der Ansprüche 8 und 9, wobei die Wärmeaustauschanordnung (20, 21, 22) einen Primäraustauscher (20) zum Wärmeaustausch zwischen den aus dem Ofen (10) abgeführten Rauchgasen und der Luft (24) und einen Sekundäraustauscher (21, 22) zum Wärmeaustausch zwischen der erwärmten Luft (25) aus dem Primäraustauscher (20) und dem Verbrennungsreagenz (28a, 29a) umfasst.

11. Anlage nach einem der Ansprüche 8 bis 9, wobei die Wärmeaustauschanordnung (20, 21, 22) fluidisch mit einer Quelle des reichen Oxidationsmittels (28a), bevorzugt einer Quelle des reichen Oxidationsmittels und mit einer Quelle des gasförmigen Brennstoffs (29a) verbunden ist.

12. Anlage nach einem der Ansprüche 8 bis 11, wobei der Ausgang für temperierte Luft (27) fluidisch mit einem Ofen zur Entschlichtung durch Verflüchtigung und/oder mit einem Ofen zur Entschlichtung durch Verbrennung und/oder einem Ofen zur Entschlichtung durch Verflüchtigung und Verbrennung (60a, 60b) verbunden ist.

13. Anlage nach einem der Ansprüche 8 bis 12, wobei eine Anordnung zur Produktion eines Glasfaserprodukts aus dem oder den gesammelten Filamenten (56) mindestens eine Einrichtung einschließt, die ausgewählt ist aus: Schneideeinrichtungen, Spinneinrichtungen (56), Zwirneinrichtungen, Texturiereinrichtungen, Umspinnungseinrichtungen, Flechteinrichtungen, Webeinrichtungen und Strickeinrichtungen.

14. Anlage nach einem der Ansprüche 8 bis 13, umfassend eine Endbearbeitungseinheit stromabwärts des Entschlichtungsofens (60a, 60b).

## Claims

1. Method for producing a glass fibre product (61, 62) wherein the molten glass is transformed into glass fibre product (61, 62) by:
∘ spinning the molten glass into at least one thread (55),
∘ drawing the at least one thread into one or more filaments (56),
∘ sizing the filament(s) (56),
∘ collecting the filament(s) (56),
∘ producing the glass fibre product (61) by means of the collected, drawn filament(s), and
∘ thermal de-sizing of the glass fibre product (61),
method wherein the molten glass is produced in a melting furnace (10) heated by combustion of a fuel (29a) with a rich oxidant (28a) having an oxygen content of 80%vol. to 100%vol., with heat generation and fumes, said fumes generated being evacuated from the melting furnace at a temperature of between 1000°C and 1600°C,
the method being **characterised in that**:
∘ air (24) is heated by heat exchange with fumes evacuated into a heat exchange unit (20, 21, 22) with obtention of hot air (25),
∘ a reagent (28a, 29a) selected from among rich oxidants and gaseous fuels is preheated by heat exchange with the hot air (25) in the heat exchange unit (20, 21, 22) with obtention, on the one hand, of preheated reagent (28b, 29b) and, on the other hand, of temperate air (27) at a temperature of between 200°C and 500°C,
∘ the preheated reagent (28a, 29a) is used as a combustion reagent in the melting furnace (10),
∘ the temperate air (27) coming from the heat exchange unit (20, 21, 22) is implemented during the thermal de-sizing step, preferably by putting the temperate air (27) in contact with the glass fibre product (61) during the de-sizing, in order to promote the volatilisation and/or the combustion of the sizing present on the glass fibre product (61).

2. Method according to claim 1, wherein the heat exchange unit (20, 21, 22) comprises a primary exchanger (20) and a secondary exchanger (21, 22), air (24) being heated by heat exchange with fumes evacuated from the furnace in the primary exchanger (20) with obtention of hot air (25) at a temperature of between 500°C and 800°C and the combustion reagent (28a, 29a) is preheated in the secondary exchanger (21, 22) by heat exchange with hot air (25) coming from the primary exchanger (20).

3. Method according to claim 1 or 2, wherein the thermal de-sizing step comprises a step of de-sizing by volatilisation and/or a step of de-sizing by combustion.

4. Method according to one of claims 1 to 3, wherein the de-sizing step comprises a step of de-sizing by volatilisation at a temperature of between 250°C and 380°C.

5. Method according to one of claims 1 to 4, wherein the de-sizing step comprises a step of de-sizing by combustion at a temperature of between 475°C and 820°C.

6. Method according to one of the preceding claims, wherein the de-sized glass fibre product is subjected to a finishing step.

7. Method according to one of the preceding claims, wherein the glass fibre product (61) is selected from among threads, textile products, reinforcing products, products reinforced by means of glass fibres, acoustic insulation products, thermal insulation products and products which protect against fire.

8. Installation comprising a glass melting furnace (10) and a transformation unit for the transformation of molten glass into a glass fibre product (61, 62):
∘ the melting furnace (10) comprising a molten glass outlet, a fume outlet and at least one burner (12) for the combustion of a fuel (29a) with a rich oxidant (28a) having an oxygen content of 80%vol. to 100%vol.;
∘ the transformation unit comprising:
▪ a spinneret (51) for spinning molten glass coming from the melting furnace (10) into at least one thread (55), said spinneret (51) being fluidically connected to the molten glass outlet of the furnace (10);
▪ a drawing device (54) for drawing the at least one thread (55) coming from the spinneret (51) into one or more filaments (56);
▪ a sizer for sizing the filament(s) (56);
▪ a collector for collecting the sized filament(s) (56);
▪ a unit (53) for the production of a glass fibre product (61) from the collected filament(s) (56); and
▪ a de-sizing furnace (60a, 60b) for the de-sizing of the glass fibre product (61),
the installation being **characterised:**
• **in that** it comprises a heat exchange unit (20, 21, 22) for heating air (24) by heat exchange with fumes evacuated from the melting furnace (10) and for preheating a combustion reagent (28a, 29a) by heat exchange with hot air (25) with obtention of preheated combustion reagent (28b, 29b) and temperate air (27), the heat exchange unit (20, 21, 22) being fluidically connected to an air source (23), to the fume outlet of the melting furnace (10) and to a source of a combustion agent selected between rich oxidant and gaseous fuel, the preheated combustion reagent outlet of the secondary exchanger being fluidically connected to the burner (12) of the melting furnace (10) and,
• **in that** the heat exchange unit (20, 21, 22) has a preheated combustion reagent outlet fluidically connected to the burner (12) of the melting furnace (10), as well as a temperate air outlet (27) fluidically connected to the de-sizing furnace (60a, 60b), in order to put the temperate air (27) in contact with the glass fibre product (61) in the de-sizing furnace and/or to use temperate air as an oxidizer for heating the de-sizing furnace (60a, 60b) by combustion.

9. Installation according to claim 8, wherein the temperate air outlet (27) of the heat exchange unit (20, 21, 22) is fluidically connected to the de-sizing furnace (60a, 60b) in order to put temperate air (27) in contact with the glass fibre product (61) in the de-sizing furnace (60a, 60b).

10. Installation according to one of claims 8 and 9, wherein the heat exchange unit (20, 21, 22) comprises a primary exchanger (20) for the heat exchange between the fumes evacuated from the furnace (10) and the air (24) and a secondary exchanger (21, 22) for the heat exchange between the heated air (25) coming from the primary exchanger (20) and the combustion reagent (28a, 29a).

11. Installation according to any one of claims 8 to 9, wherein the heat exchange unit (20, 21, 22) is fluidically connected to a rich oxidant source (28a), preferably to a rich oxidant source and to a gaseous fuel source (29a).

12. Installation according to any one of claims 8 to 11, wherein the temperate air outlet (27) is fluidically connected to a furnace for de-sizing by volatilisation and/or a furnace for de-sizing by combustion and/or a furnace for de-sizing by volatilisation and combustion (60a, 60b).

13. Installation according to any one of claims 8 to 12, wherein a unit for the production of a glass fibre product from the collected filament(s) (56) includes at least one item of equipment selected from among: cutting equipment, spinning equipment (56), torsion equipment, texturising equipment, covering equipment, braiding equipment, weaving equipment, and knitting equipment.

14. Installation according to any one of claims 8 to 13 comprising a finishing unit downstream from the de-sizing furnace (60a, 60b).
